# DEMANDE DE BREVET EUROPEEN

(11) **EP 3 398 484 A1**
(43) Date de publication de la demande: **07.11.2018**
(21) Numéro de dépôt: 18169965.3
(22) Date de dépôt: 27.04.2018
(51) Int. Cl.: A47J 27/08, A47J 36/06

(54) **COUVERCLE AVEC PASSAGE DE VAPEUR REGLABLE**

(30) Priorité: 03.05.2017 FR 1753893
(71) Demandeur: SEB S.A., 69130 Ecully (FR)
(72) Inventeur: DESHAYES, Jean-Louis, 53700 AVERTON (FR); MORIN, Yoann, 53470 MARTIGNE-SUR-MAYENNE (FR)
(74) Mandataire: Bourrières, Patrice

(57) **Abrégé**

- L'invention concerne un couvercle (1) pour un récipient culinaire, notamment pour un récipient de travail d'un appareil électroménager de préparation culinaire, comportant un corps de couvercle (10) présentant au moins un orifice (12) d'échappement de vapeur et un bouchon (30) amovible monté sur le corps de couvercle (10), le bouchon (30) pouvant occuper une première position stable, dans laquelle le bouchon (30) est retenu, et une deuxième position stable, dans laquelle la section de passage de l'orifice (12) d'échappement de vapeur est plus faible que pour la première position stable et depuis laquelle le bouchon (30) peut être retiré, le bouchon (30) étant monté mobile depuis la première position stable jusqu'au-delà de la deuxième position stable.
- Conformément à l'invention, le corps de couvercle (10), respectivement le bouchon, comporte une rampe (25) soulevant le bouchon (30) par rapport au corps de couvercle (10) lorsque le bouchon (30) est déplacé au-delà de la deuxième position stable depuis la première position stable.

## Description

La présente invention concerne le domaine technique des couvercles de récipients culinaires utilisés pour la préparation et/ou la cuisson des aliments.

La présente invention concerne plus particulièrement les couvercles du type précité comportant un passage de vapeur réglable.

La présente invention concerne notamment, mais non exclusivement, les couvercles des cuves des appareils électroménagers de préparation culinaire chauffants.

Le document WO2014/096665 divulgue un couvercle pour un récipient de travail d'un appareil électroménager de préparation culinaire, comportant une ouverture pour l'introduction d'ingrédients, au moins un orifice d'échappement de vapeur, ainsi qu'un bouchon amovible venant se loger dans ladite ouverture. Le bouchon est mobile en rotation dans cette ouverture formée par une cheminée centrale du couvercle. Le déplacement du bouchon permet de faire varier la section de passage de l'orifice d'échappement de vapeur. Toutefois la partie inférieure du bouchon comporte deux ergots de verrouillage engagés sous un bord inférieur de la cheminée, et la paroi interne de cette cheminée présente deux gorges prévues pour le passage des ergots de verrouillage, afin de retirer le bouchon du couvercle. Le bouchon peut être retiré du couvercle seulement dans une position intermédiaire entre les deux positions extrêmes correspondant à la section de passage minimale et à la section de passage maximale de l'orifice d'échappement de vapeur. Un inconvénient de cette réalisation réside dans le fait que le retrait du bouchon est malaisé, notamment lorsqu'un débordement survient, le bouchon devant être précisément indexé par rapport au couvercle pour pouvoir être retiré du couvercle.

Un objet de la présente invention est de proposer un couvercle du type précité, dont l'utilisation est facilitée.

Cet objet est atteint avec un couvercle pour un récipient culinaire, notamment pour un récipient de travail d'un appareil électroménager de préparation culinaire, comportant un corps de couvercle présentant au moins un orifice d'échappement de vapeur et un bouchon amovible monté sur le corps de couvercle, le bouchon pouvant occuper une première position stable, dans laquelle le bouchon est retenu par rapport au corps de couvercle, et une deuxième position stable, dans laquelle la section de passage de l'orifice d'échappement de vapeur est plus faible que pour la première position stable et depuis laquelle le bouchon peut être soulevé du corps de couvercle pour être retiré du corps de couvercle, le bouchon étant monté mobile depuis la première position stable jusqu'au-delà de la deuxième position stable, du fait que le corps de couvercle, respectivement le bouchon, comporte une rampe soulevant le bouchon par rapport au corps de couvercle lorsque le bouchon est déplacé au-delà de la deuxième position stable depuis la première position stable.

Ainsi le bouchon peut occuper une première position stable, dans laquelle le bouchon est retenu par rapport au corps de couvercle, et une deuxième position stable, dans laquelle le bouchon peut être retiré du corps de couvercle. Lorsque l'utilisateur déplace le bouchon depuis la première position stable, dans laquelle le bouchon ne peut être retiré du corps de couvercle, vers la deuxième position stable, dans laquelle le bouchon peut être retiré du corps de couvercle, le soulèvement du bouchon par rapport au corps de couvercle permet de signaler que le bouchon a atteint la deuxième position stable, à partir de laquelle le bouchon peut être retiré du corps de couvercle. Le soulèvement du bouchon par rapport au corps de couvercle permet également de faciliter le retrait du bouchon du corps de couvercle.

Selon une forme de réalisation avantageuse, le corps de couvercle comporte une butée supérieure, et dans la première position stable la butée supérieure bloque le soulèvement du bouchon et empêche le retrait du bouchon du corps de couvercle.

Dans la deuxième position stable, le bouchon peut être soulevé par rapport au corps de couvercle pour être retiré du corps de couvercle.

Avantageusement alors, le corps de couvercle comporte une autre butée supérieure, agencée de préférence à l'opposé de la butée supérieure, et dans la première position stable l'autre butée supérieure bloque le soulèvement du bouchon et empêche le retrait du bouchon du corps de couvercle.

Avantageusement encore, le bouchon est monté mobile sur le corps de couvercle depuis la première position stable vers une troisième position stable au-delà de la deuxième position stable, et dans la troisième position stable le bouchon est relevé par rapport au corps de couvercle et peut être retiré du corps de couvercle. En d'autres termes, dans la troisième position stable, le bouchon est davantage relevé par rapport au corps de couvercle que dans la première position stable ou dans la deuxième position stable.

Avantageusement encore, le corps de couvercle présente une butée latérale bloquant le déplacement du bouchon au-delà de la première position stable, lorsque le bouchon est déplacé depuis la deuxième position stable vers la première position stable.

Avantageusement encore, le déplacement du bouchon de la première position stable à la deuxième position stable permet de faire varier la section de passage de l'orifice d'échappement de vapeur.

Avantageusement encore, le bouchon peut occuper plusieurs positions stables entre la première position stable et la deuxième position stable, et le déplacement du bouchon entre la première position stable et la deuxième position stable permet de préférence de faire varier de façon progressive la section de passage de l'orifice d'échappement de vapeur.

Selon une forme de réalisation préférée, le bouchon est monté mobile en rotation sur le corps de couvercle, depuis la première position stable jusqu'au-delà de la deuxième position stable.

Avantageusement encore, le corps de couvercle comprend une paroi d'obturation annulaire et une protubérance centrale montée sur la paroi d'obturation annulaire et présentant une face externe, et la protubérance centrale porte le bouchon.

Avantageusement alors, le bouchon est monté mobile en rotation sur la protubérance centrale.

Avantageusement encore, la protubérance centrale comporte un logement de réception du bouchon, et le bouchon comporte un noyau inférieur engagé dans ledit logement. Ainsi le noyau inférieur engagé dans le logement peut guider en rotation le bouchon.

Avantageusement encore, le logement forme une ouverture pour l'introduction d'ingrédients.

Avantageusement encore, la rampe est agencée sur la face externe de la protubérance centrale. Cette disposition permet d'éviter que les ingrédients introduits par l'ouverture salissent la rampe.

Avantageusement encore, la butée supérieure est agencée sur la face externe de la protubérance centrale.

Avantageusement alors, l'autre butée supérieure est agencée sur la face externe, de préférence à l'opposé de la butée supérieure par rapport au logement.

Avantageusement encore, le bouchon comporte une portion de paroi périphérique ménageant un échappement latéral et dans la deuxième position stable la portion de paroi périphérique vient masquer au moins partiellement l'orifice d'échappement de vapeur.

Avantageusement alors, dans la première position stable l'échappement latéral est agencé en regard de l'orifice d'échappement de vapeur.

Avantageusement alors, le bouchon comporte un ergot interne issu de la portion de paroi périphérique, et l'ergot interne est agencé sous la butée supérieure lorsque le bouchon occupe la première position stable.

Avantageusement alors, l'ergot interne vient en appui sur la rampe lorsque le bouchon est déplacé depuis la première position stable au-delà de la deuxième position stable.

Avantageusement alors, le bouchon comporte un autre ergot interne, agencé de préférence à l'opposé de l'ergot interne par rapport au noyau inférieur, l'autre ergot interne étant agencé sous l'autre butée supérieure lorsque le bouchon occupe la première position stable. L'autre ergot interne est issu de préférence de la portion de paroi périphérique.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un couvercle selon l'invention, comportant un corps de couvercle et un bouchon,
- la figure 2 est une vue partielle en élévation et en coupe du couvercle illustré sur la figure 1, avec le bouchon monté sur le corps de couvercle,
- la figure 3 est une vue en élévation et en coupe du bouchon du couvercle illustré sur les figures 1 et 2,
- la figure 4 est une vue en perspective retournée du bouchon du couvercle illustré sur les figures 1 et 2,
- la figure 5 est une vue partielle de dessus du corps de couvercle du couvercle illustré sur les figures 1 et 2,
- la figure 6 est une vue partielle en perspective du corps de couvercle du couvercle illustré sur les figures 1 et 2, selon une première orientation,
- la figure 7 est une vue partielle en perspective du corps de couvercle du couvercle illustré sur les figures 1 et 2, selon une deuxième orientation,
- la figure 8 est une vue partielle en perspective du corps de couvercle du couvercle illustré sur les figures 1 et 2, selon une troisième orientation,
- la figure 9 est une vue partielle en perspective du couvercle illustré sur les figures 1 et 2, dans laquelle le bouchon occupe une première position stable, selon une troisième orientation,
- la figure 10 est une vue partielle en perspective du couvercle illustré sur les figures 1 et 2, dans laquelle le bouchon occupe une troisième position au delà d'une deuxième position stable.

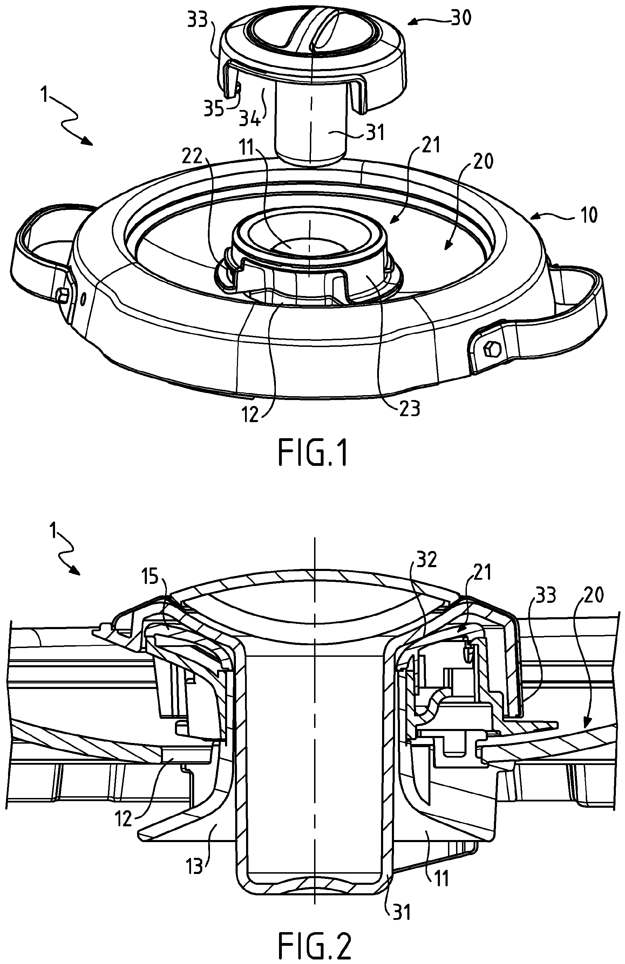

Le couvercle 1 pour récipient culinaire illustré sur les figures est prévu pour être utilisé avec un récipient de travail d'un appareil électroménager de préparation culinaire. Le couvercle 1 comporte un corps de couvercle 10, visible au moins partiellement sur les figures 1, 2, 5 à 10 et un bouchon 30 amovible, visible sur les figures 1 à 4, 9 et 10.

Le bouchon 30 amovible est monté sur le corps de couvercle 10, tel que représenté sur les figures 1, 9 et 10. Le corps de couvercle 10 présente au moins un orifice 12 d'échappement de vapeur, visible sur les figures 1, 2, 6 et 10.

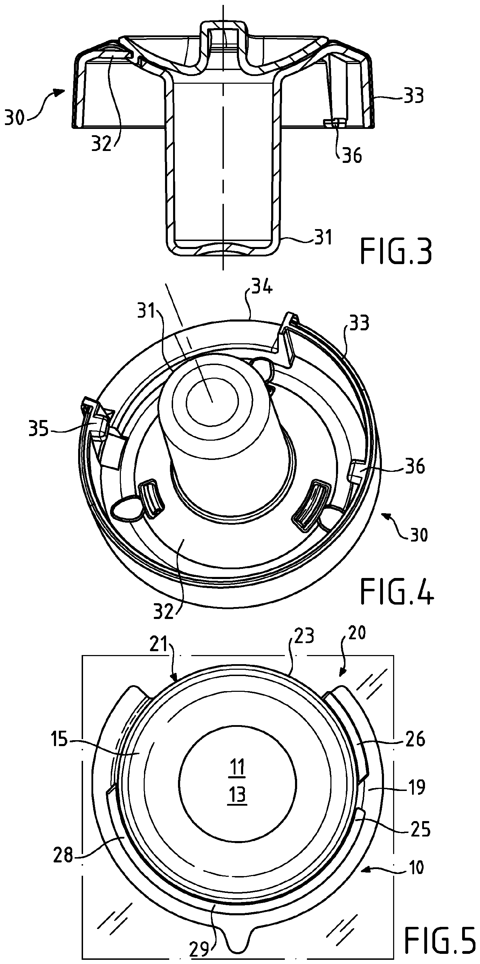

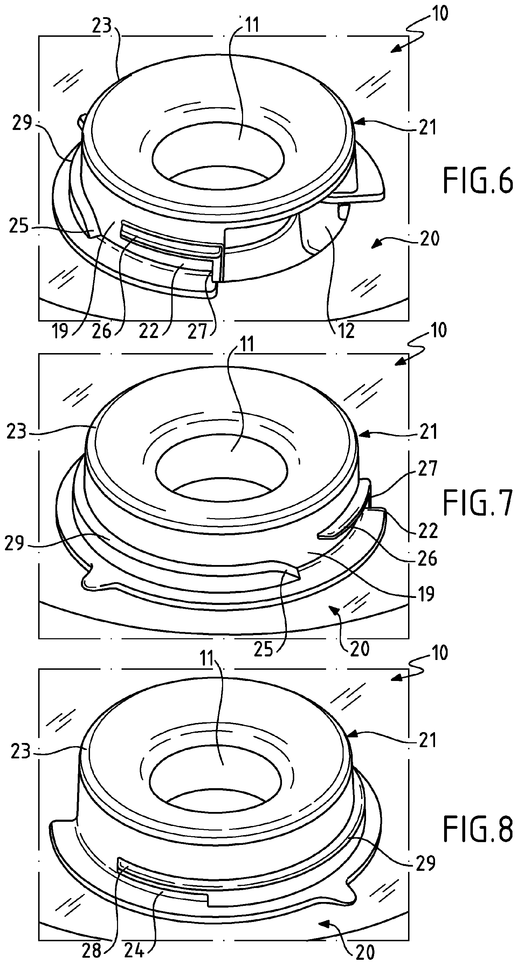

Tel que visible sur les figures 5, 6, 7 et 10, le corps de couvercle 10 comporte une rampe 25. Tel que visible sur les figures 1, 6, 7 et 10, le corps de couvercle 10 comporte une butée supérieure 22. Tel que visible sur la figure 8, le corps de couvercle 10 comporte une autre butée supérieure 24. L'autre butée supérieure est agencée à l'opposé de la butée supérieure 22. Le corps de couvercle 10 présente une butée latérale 27 adjacente à la butée supérieure 22.

Dans l'exemple de réalisation illustré sur les figures, le corps de couvercle 10 comprend une paroi d'obturation annulaire 20 et une protubérance centrale 21 montée sur la paroi d'obturation annulaire 20. La protubérance centrale 21 porte le bouchon 30. La paroi d'obturation annulaire 20 est avantageusement réalisée en verre.

Dans l'exemple de réalisation illustré sur les figures, l'orifice 12 d'échappement de vapeur est agencé entre la paroi d'obturation annulaire 20 et la protubérance centrale 21. A titre de variante, l'orifice 12 d'échappement de vapeur pourrait notamment être ménagé dans la paroi d'obturation annulaire 20 ou dans la protubérance centrale 21.

Dans l'exemple de réalisation illustré sur les figures, la protubérance centrale 21 comporte un logement 13 de réception du bouchon 30. Plus particulièrement dans l'exemple de réalisation illustré sur les figures, le logement 13 forme une ouverture 11 pour l'introduction d'ingrédients dans le récipient sur lequel est disposé le couvercle 1.

La protubérance centrale 21 présente une face externe 23. La protubérance centrale 21 comporte une paroi interne 15 s'étendant à l'intérieur de la face externe 23 et définissant l'ouverture 11 pour l'introduction des ingrédients, ladite paroi interne 15 formant le logement 13 de réception du bouchon 30. Plus particulièrement dans l'exemple de réalisation illustré sur les figures, la paroi interne 15 est en forme d'entonnoir.

La rampe 25 est agencée sur la face externe 23 de la protubérance centrale 21. La butée supérieure 22 est agencée sur la face externe 23 de la protubérance centrale 21. La butée supérieure 22 est formée par une nervure latérale 26 ménagée sur la face externe 23 de la protubérance centrale 21. L'autre butée supérieure 24 est agencée sur la face externe 23 de la protubérance centrale 21, à l'opposé de la butée supérieure 22 par rapport au logement 13. L'autre butée supérieure 24 est formée sous une autre nervure latérale 28 ménagée sur la face externe 23 de la protubérance centrale 21. L'autre nervure latérale 28 est reliée à la rampe 25 par une surface d'appui 29, visible sur les figures 5, 6, 7 et 8. La rampe 25 est séparée de la nervure latérale 26 par un espace 19 visible sur les figures 5, 6 et 7.

Tel que visible sur la figure 2, le bouchon 30 comporte un noyau inférieur 31 engagé dans le logement 13. Le bouchon 30 comporte une paroi inférieure 32 s'étendant autour de l'extrémité supérieure du noyau inférieur 31. La paroi inférieure 32 couvre la protubérance centrale 21 lorsque le noyau inférieur 31 est engagé dans le logement 13. Tel que visible sur la figure 2, la paroi inférieure 32 du bouchon 30 prend appui sur la paroi interne 15 de la protubérance centrale 21.

Tel que visible sur la figure 3, le bouchon 30 comporte une portion de paroi périphérique 33 ménageant un échappement latéral 34. Tel que visible sur les figures 1 à 4, la portion de paroi périphérique 33 est issue de la paroi inférieure 32. Tel que visible sur la figure 2, la portion de paroi périphérique 33 entoure partiellement la protubérance centrale 21 lorsque le bouchon 30 est en place sur le corps de couvercle 10.

Tel que visible sur les figures 1, 4 et 10, le bouchon 30 comporte un ergot interne 35 issu de la portion de paroi périphérique 33. Le bouchon 30 comporte un autre ergot interne 36, visible sur les figures 3 et 4. L'autre ergot interne 36 est agencé à l'opposé de l'ergot interne 35 par rapport au noyau inférieur 31. L'autre ergot interne 36 est issu de la portion de paroi périphérique 33.

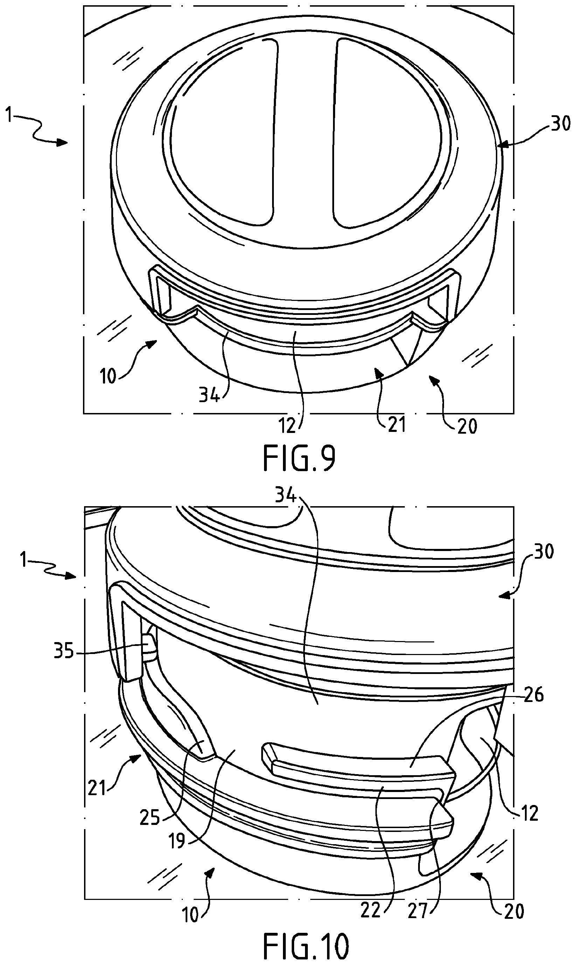

Le bouchon 30 peut occuper une première position stable, représentée sur la figure 9, dans laquelle le bouchon 30 est retenu par rapport au corps de couvercle 10. Tel que représenté sur la figure 9, l'échappement latéral 34 est agencé en regard de l'orifice 12 d'échappement de vapeur.

Le bouchon 30 peut occuper une deuxième position stable, dans laquelle la section de passage de l'orifice 12 d'échappement de vapeur est plus faible que pour la première position stable et depuis laquelle le bouchon 30 peut être soulevé du corps de couvercle 10 pour être retiré du corps de couvercle 10. En d'autres termes, dans la deuxième position stable, le bouchon 30 peut être soulevé par rapport au corps de couvercle 10 pour être retiré du corps de couvercle 10.

Le bouchon 30 est monté mobile depuis la première position stable jusqu'au-delà de la deuxième position stable. La rampe 25 soulève le bouchon 30 par rapport au corps de couvercle 10 lorsque le bouchon 30 est déplacé au-delà de la deuxième position stable depuis la première position stable, tel que représenté sur la figure 10.

Dans l'exemple de réalisation illustré sur les figures, le bouchon 30 est monté mobile sur le corps de couvercle 10 depuis la première position stable vers une troisième position stable au-delà de la deuxième position stable. Dans la troisième position stable, illustrée sur la figure 10, le bouchon 30 est relevé par rapport au corps de couvercle 10, par comparaison avec la première position stable et avec la deuxième position stable. Dans la troisième position stable, le bouchon 30 peut être retiré du corps de couvercle 10.

Le bouchon 30 peut occuper plusieurs positions stables entre la première position stable et la deuxième position stable.

Dans l'exemple de réalisation illustré sur les figures, le bouchon 30 est monté mobile en rotation sur le corps de couvercle 10, depuis la première position stable jusqu'au-delà de la deuxième position stable.

Dans l'exemple de réalisation illustré sur les figures, l'angle de rotation du bouchon entre la première position stable et la deuxième position stable est par exemple de l'ordre de 90°. L'angle de rotation du bouchon entre la première position stable et la deuxième position stable est avantageusement compris entre 60° et 120°, et de préférence entre 80° et 100°.

Dans l'exemple de réalisation illustré sur les figures, le bouchon 30 est monté mobile en rotation sur la protubérance centrale 21 du corps de couvercle 10. Le noyau inférieur 31 engagé dans le logement 13 peut être tourné dans le logement 13. Le noyau inférieur 31 engagé dans le logement 13 peut guider en rotation le bouchon 30 dans le logement 13.

La rotation du bouchon 30 dans logement 13 de réception du bouchon 30 permet de faire varier le degré de recouvrement de l'orifice 12 d'échappement de vapeur.

La rotation du bouchon 30 permet par exemple de réduire de 0 à 50% de la section de passage de l'orifice 12 d'échappement de vapeur.

Le couvercle 1 illustré sur les figures fonctionne et s'utilise de la manière suivante.

L'utilisateur met en place le bouchon 30 sur le corps de couvercle 10 en engageant le noyau inférieur 31 du bouchon 30 dans le logement 13 du corps de couvercle 10. Si l'ergot interne 35 ou l'autre ergot interne 36 repose sur la nervure latérale 26 ou sur l'autre nervure latérale 28 ou sur la surface d'appui 29, l'utilisateur tourne le bouchon 30 par rapport au corps de couvercle 10 jusqu'à ce que l'ergot interne 35 atteigne l'espace 19. Le bouchon 30 peut alors occuper la deuxième position stable. Dans la deuxième position stable la portion de paroi périphérique 33 vient masquer au moins partiellement l'orifice 12 d'échappement de vapeur.

Le déplacement du bouchon 30 de la première position stable à la deuxième position stable, ou vice versa, permet de faire varier la section de passage de l'orifice 12 d'échappement de vapeur, de façon progressive, du fait du déplacement de l'échappement latéral 34 par rapport à l'orifice 12 d'échappement de vapeur.

Lorsque l'utilisateur tourne le bouchon 30 vers la première position stable pour dégager davantage l'orifice 12 d'échappement de vapeur, l'ergot interne 35 est engagé sous la nervure latérale 26, jusqu'à atteindre la butée latérale 27, et l'autre ergot interne 36 est engagé sous l'autre nervure latérale 28. La butée latérale 27 bloque le déplacement du bouchon 30 au-delà de la première position stable, lorsque le bouchon 30 est déplacé depuis la deuxième position stable vers la première position stable. L'ergot interne 35 est agencé sous la butée supérieure 22 lorsque le bouchon 30 occupe la première position stable. Ainsi la butée supérieure 22 bloque le soulèvement du bouchon 30 et empêche le retrait du bouchon 30 du corps de couvercle 10 lorsque le bouchon est dans la première position stable. L'autre ergot interne 36 est agencé sous l'autre butée supérieure 24 lorsque le bouchon 30 occupe la première position stable. Ainsi dans la première position stable l'autre butée supérieure 24 bloque également le soulèvement du bouchon 30 et empêche le retrait du bouchon 30 du corps de couvercle 10.

Lorsque l'utilisateur tourne le bouchon 30 vers la deuxième position stable pour obturer davantage l'orifice 12 d'échappement de vapeur, l'ergot interne 35 est dégagé de la nervure latérale 26, et l'autre ergot interne 36 est dégagé de l'autre nervure latérale 28. Le bouchon 30 peut ainsi être soulevé par rapport au corps de couvercle 10 lorsque le bouchon occupe la deuxième position stable.

De plus l'ergot interne 35 vient en appui sur la rampe 25 lorsque le bouchon 30 est déplacé depuis la première position stable au-delà de la deuxième position stable. Le bouchon 30 est ainsi soulevé par rapport au corps de couvercle 10, ce qui indique à l'utilisateur que le bouchon 30 a atteint la deuxième position stable dans laquelle le bouchon 30 peut être retiré.

A titre de variante, la rampe 25 n'est pas nécessairement ménagée sur le corps de couvercle 10. Le bouchon 30 peut notamment comporter une rampe soulevant le bouchon 30 par rapport au corps de couvercle 10 lorsque le bouchon 30 est déplacé au-delà de la deuxième position stable depuis la première position stable.

A titre de variante, le bouchon 30 n'est pas nécessairement monté mobile en rotation sur le corps de couvercle 10. Le bouchon 30 peut notamment être monté mobile en translation sur le corps de couvercle 10.

La présente invention n'est nullement limitée à l'exemple de réalisation décrit et à ses variantes, mais englobe de nombreuses modifications dans le cadre des revendications.

## Revendications

1. Couvercle (1) pour un récipient culinaire, notamment pour un récipient de travail d'un appareil électroménager de préparation culinaire, comportant un corps de couvercle (10) présentant au moins un orifice (12) d'échappement de vapeur et un bouchon (30) amovible monté sur le corps de couvercle (10), le bouchon (30) pouvant occuper une première position stable, dans laquelle le bouchon (30) est retenu par rapport au corps de couvercle (10), et une deuxième position stable, dans laquelle la section de passage de l'orifice (12) d'échappement de vapeur est plus faible que pour la première position stable et depuis laquelle le bouchon (30) peut être soulevé du corps de couvercle (10) pour être retiré du corps de couvercle (10), le bouchon (30) étant monté mobile depuis la première position stable jusqu'au-delà de la deuxième position stable, **caractérisé en ce que** le corps de couvercle (10), respectivement le bouchon (30), comporte une rampe (25) soulevant le bouchon (30) par rapport au corps de couvercle (10) lorsque le bouchon (30) est déplacé au-delà de la deuxième position stable depuis la première position stable.

2. Couvercle (1) selon la revendication 1, **caractérisé en ce que** le corps de couvercle (10) comporte une butée supérieure (22) et **en ce que** dans la première position stable la butée supérieure (22) bloque le soulèvement du bouchon (30) et empêche le retrait du bouchon (30) du corps de couvercle (10).

3. Couvercle (1) selon l'une des revendications 1 ou 2, **caractérisé en ce que** le bouchon (30) est monté mobile sur le corps de couvercle (10) depuis la première position stable vers une troisième position stable au-delà de la deuxième position stable, et **en ce que** dans la troisième position stable le bouchon (30) est relevé par rapport au corps de couvercle (10) et peut être retiré du corps de couvercle (10).

4. Couvercle (1) selon l'une des revendications 1 à 3, **caractérisé en ce que** le corps de couvercle (10) présente une butée latérale (27) bloquant le déplacement du bouchon (30) au-delà de la première position stable, lorsque le bouchon (30) est déplacé depuis la deuxième position stable vers la première position stable.

5. Couvercle (1) selon l'une des revendications 1 à 4, **caractérisé en ce que** le bouchon (30) peut occuper plusieurs positions stables entre la première position stable et la deuxième position stable, et **en ce que** le déplacement du bouchon (30) entre la première position stable et la deuxième position stable permet de préférence de faire varier de façon progressive la section de passage de l'orifice (12) d'échappement de vapeur.

6. Couvercle (1) selon l'une des revendications 1 à 5, **caractérisé en ce que** le bouchon (30) est monté mobile en rotation sur le corps de couvercle (10), depuis la première position stable jusqu'au-delà de la deuxième position stable.

7. Couvercle (1) selon l'une des revendications 1 à 6, **caractérisé en ce que** le corps de couvercle (10) comprend une paroi d'obturation annulaire (20) et une protubérance centrale (21) montée sur la paroi d'obturation annulaire (20) et présentant une face externe (23), et **en ce que** la protubérance centrale (21) porte le bouchon (30).

8. Couvercle (1) selon la revendication 6 et la revendication 7, **caractérisé en ce que** le bouchon (30) est monté mobile en rotation sur la protubérance centrale (21).

9. Couvercle (1) selon la revendication 8, **caractérisé en ce que** la protubérance centrale (21) comporte un logement (13) de réception du bouchon (30), et **en ce que** le bouchon (30) comporte un noyau inférieur (31) engagé dans ledit logement (13).

10. Couvercle (1) selon la revendication 9, **caractérisé en ce que** le logement (13) forme une ouverture (11) pour l'introduction d'ingrédients.

11. Couvercle (1) selon l'une des revendications 7 à 10, **caractérisé en ce que** la rampe (25) est agencée sur la face externe (23) de la protubérance centrale (21).

12. Couvercle (1) selon la revendication 2 et selon l'une des revendications 7 à 10, **caractérisé en ce que** la butée supérieure (22) est agencée sur la face externe (23) de la protubérance centrale (21).

13. Couvercle (1) selon l'une des revendications 7 à 12, **caractérisé en ce que** le bouchon (30) comporte une portion de paroi périphérique (33) ménageant un échappement latéral (34) et **en ce que** dans la deuxième position stable la portion de paroi périphérique (33) vient masquer au moins partiellement l'orifice (12) d'échappement de vapeur.

14. Couvercle (1) selon la revendication 2 et selon la revendication 13, **caractérisé en ce que** le bouchon (30) comporte un ergot interne (35) issu de la portion de paroi périphérique (33), et **en ce que** l'ergot interne (35) est agencé sous la butée supérieure (22) lorsque le bouchon (30) occupe la première position stable.

15. Couvercle (1) selon la revendication 14, **caractérisé en ce que** l'ergot interne (35) vient en appui sur la rampe (25) lorsque le bouchon (30) est déplacé depuis la première position stable au-delà de la deuxième position stable.
